# EUROPÄISCHE PATENTSCHRIFT

(11) **EP 1 095 907 B1**
(45) Veröffentlichungstag und Bekanntmachung des Hinweises auf die Patenterteilung: **26.12.2007**
(21) Anmeldenummer: 00119056.0
(22) Anmeldetag: 02.09.2000
(51) Int. Cl.: C01C 1/04, B01J 19/12

(54) **Verfahren zur plasmakatalytischen Erzeugung von Ammoniak**
Process for the plasma-catalytic preparation of ammonia
Procédé pour la production plasma-catalytique d'ammoniac

(30) Priorität: 28.10.1999 DE 19951976
(43) Veröffentlichungstag der Anmeldung: 02.05.2001
(73) Patentinhaber: Umicore AG & Co. KG, 63457 Hanau-Wolfgang (DE)
(72) Erfinder: Gieshoff, Jürgen, Dr., 63599 Biebergemünd (DE); Lang, Jürgen, 73252 Lenningen/Teck (DE)
(74) Vertreter: Stellbrink, Axel

(56) Entgegenhaltungen:
- US-A- 4 451 436
- US-A- 4 795 617
- KAMEOKA S ET AL: "FORMATION OF NOVEL AL2O3 SURFACE (AL-O) BY PLASMA-EXCITED NITROGEN AND ITS CATALYTIC APPLICATION - PRODUCTION OF AMMONIA AND OXYGEN FROM NITROGEN AND WATER" APPLIED SURFACE SCIENCE, ELSEVIER, AMSTERDAM, NL, Bd. 121, Nr. 122, 25. November 1997 (1997-11-25), Seiten 351-354, XP000950092 ISSN: 0169-4332
- KUNIMORI K ET AL: "Plasma-induced chemisorption of nitrogen and its chemical reactivity on alumina" JOINT MEETING OF 2ND INTERNATIONAL CONFERENCE ON REACTIVE PLASMA (ICRP-2) AND 11TH SYMPOSIUM ON PLASMA PROCESSING (SPP-11), YOKOHAMA, JAPAN, 19-21 JAN. 1994, Bd. 33, Nr. 7B, Seiten 4195-4197, XP002188557 Japanese Journal of Applied Physics, Part 1 (Regular Papers & Short Notes), July 1994, Japan ISSN: 0021-4922

## Beschreibung

Die Erfindung betrifft ein Verfahren zur plasmakatalytischen Erzeugung von Ammoniak.

Die Ammoniak-Synthese ist einer der wichtigsten industriellen Prozesse in der Chemie. Großtechnisch wird Ammoniak nach dem Haber-Bosch-Verfahren aus Wasserstoff und Stickstoff hergestellt.

Neben der Verwendung für die Herstellung von Düngemitteln erlangt Ammoniak auch zunehmend Bedeutung bei der Entfernung von Stickoxiden aus Sauerstoff enthaltenden Abgasen durch selektive katalytische Reduktion der Stickoxide (SCR-Verfahren; selective catalytic reduction), wobei die Stickoxide mit Ammoniak an einem geeigneten Katalysator zu Stickstoff und Wasser umgesetzt werden.

Für die selektive katalytische Reduktion von in mageren Abgasen von Kraftfahrzeugen enthaltenen Stickoxiden werden einfache Verfahren zur Erzeugung von Ammoniak an Bord des Fahrzeugs benötigt. Neben der Erzeugung durch Hydrolyse von Harnstoff wären Verfahren unter Verwendung von elektrischen Gasentladungen vorteilhaft, da in solchen Plasmen chemische Reaktionen bei niedrigen Temperaturen angeregt werden können, die sonst nur bei wesentlich höheren Temperaturen möglich sind.

Kameoka et al. ("Formaition of novel Al2O3 surface (Al-O*) by plasma-excited nitrogen and its catalytic application - production of ammonia and oxygen from nitrogen and water"; Applied Surface Science 121/122(1997) 351-354) beobachteten die Bildung von Ammoniak durch Reaktion von angeregten Stickstoffmolekülen N₂* mit den Hydroxylgruppen an der Oberfläche des Aluminiumoxids. Die Stickstoffmoleküle wurden in einer Hochfrequenz-Gasentladung (13,56 MHz, 60 W, 1 Torr) angeregt. Das an der Oberfläche gebildete und adsorbierte Ammoniak wurde durch Erhitzen des Aluminiumoxids in Helium auf 450°C desorbiert und nachgewiesen. Eine zweite Behandlung des Aluminiumoxids im Stickstoffplasma führte aufgrund der Verarmung der Oberfläche an Hydroxylgruppen zu einer drastischen Verminderung der Ammoniakbildung. Die Wiederherstellung der Hydroxylgruppen an der Oberfläche des Aluminiumoxids durch Behandeln in Wasserdampf war nicht möglich. Dies führten die Autoren auf die Bildung eines neuen Oberflächenzustandes Al-O* des Aluminiumoxids durch den angeregten Stickstoff zurück. Der angeregte Stickstoff besteht aus Radikalen (N₂*,N*) und/oder Ionen (N₂⁺, etc):

N₂* + 6A1-OH ⇒ 2NH₃ + 6Al-O* (1)

Stellvertretend für alle möglichen angeregten Stickstoffkomponenten ist in Reaktionsgleichung (1) nur N₂* angegeben. Der ursprüngliche, hydroxylierte Oberflächenzustand des Aluminiumoxids ließ sich erst durch Behandeln des Aluminiumoxids in Wasser (flüssig) wieder herstellen. Hierbei kam es zur Abspaltung von Sauerstoff gemäß der folgenden Reaktionsgleichung:

6Al-O* + 3H₂O ⇒ 6Al-OH + 1,5O₂ (2)

Aus den Reaktionsgleichungen (1) und (2) ergibt sich für den Gesamtprozeß:

N₂* + 3H₂O ⇒ 2NH₃ + 1,5O₂ (3)

Bei der Summengleichung (3) ist zu berücksichtigen, dass der dadurch beschriebene Prozeß nicht kontinuierlich abläuft, sondern ein ständiges Hin- und Herschalten zwischen Ammoniakbildung und Hydroxylierung der Oberfläche des Aluminiumoxids erfordert. Außerdem läuft dieser Prozeß nicht bei Normaldruck ab, sondern bei einem Druck von nur 1 Torr. Außerdem muss der gebildete Ammoniak bei erhöhten Temperaturen von der Oberfläche desorbiert werden.

Aufgabe der vorliegenden Erfindung war es daher, ein Verfahren anzugeben, welches es gestattet Ammoniak kontinuierlich und bei niedrigen Temperaturen unter Zuhilfenahme eines elektrischen Gasentladungsplasmas zu erzeugen.

Diese Aufgabe wird dadurch gelöst, dass ein Stickstoff und Wasserdampf enthaltender Gasstrom bei Atmosphärendruck durch eine elektrische Gasentladung geführt wird, in deren Entladungsraum ein Katalysator angeordnet ist, welcher eine katalytisch aktive Komponente aus wenigstens einem Metall aus der Gruppe Titan, Zirkon, Hafnium, Vanadium, Niob, Tantal, Chrom, Molybdän, Wolfram, Eisen, Ruthenium, Osmium, Kobalt, Rhodium, Iridium, Nickel, Palladium, Platin, Mangan und Kupfer auf einem Trägermaterial enthält, wobei als Gasentladung eine dielektrisch behinderte Entladung eingesetzt wird. Das Trägermaterial ist aus Titanoxid, Aluminiumoxid, Siliziumdioxid, Ceroxid, Zirkonoxid, Zeolithen oder Mischungen und Mischoxiden davon mit einer spezifischen Oberfläche von mehr als 5 m²/g ausgewählt.

Das erfindungsgemäße Verfahren kann ebenfalls durch Reaktionsgleichung (3) beschrieben werden. Im Unterschied zu dem bekannten Verfahren läuft die Bildung von Ammoniak im vorliegenden Verfahren jedoch kontinuierlich ab. Zu diesem Zweck werden Stickstoff und Wasserdampf gleichzeitig durch die Gasentladung geleitet. Dies allein führt jedoch noch nicht zum Erfolg. Wesentlich für das Verfahren ist vielmehr die Anordnung eines geeigneten Katalysators in der Gasentladung.

Für die Zwecke des Verfahrens ist ein Trägerkatalysator geeignet, der die genannten katalytisch aktiven Metalle auf einem Trägermaterial enthält. Nach dem derzeitigen Verständnis der Erfindung ist die Eigenschaft dieser Metalle wichtig, Wasserstoff zu adsorbieren. Durch die Einwirkung der Gasentladung werden nämlich die Wasserdampfmoleküle des Gasstromes in Radikale und Ionen (zum Beispiel OH⁻-und H⁺-Ionen) gespalten. Der Wasserstoff wird zumindest teilweise vom Katalysator adsorbiert und steht so für die Bildung von Ammoniak durch Kontakt mit dem durch die Gasentladung angeregten Stickstoff zur Verfügung, wobei der angeregte Stickstoff aus den schon genannten Komponenten bestehen kann.

In einer elektrischen Gasentladung, beispielsweise auf Basis von transienten Glimmentladungen, bildet sich ein sogenanntes nichtthermisches Plasma aus, in dem jedes Teilsystem des Plasmas, das Elektronengas, das Ionengas und das Neutralgas, eine eigene Temperatur hat. Für die Zwecke der Erfindung sind eine Vielzahl unterschiedlicher, nichtthermischer Gasentladungsplasmen einsetzbar. Abhängig vom Druck im Entladungsraum und von der elektrischen Anregungsart bilden sich unterschiedliche Entladungstypen aus. Beispielhaft genannt seien hier die Gleichstrom-Koronaentladung, die positive Koronaentladung, die Hochfrequenz- und Mikrowellenentladung und die Barrierenentladung. Letztere ist ihrem Wesen nach eine rasch verlöschende, transiente Glimmentladung.

Beim erfindungsgemäßen Verfahren werden Barrierenentladungen verwendet, da sie bei Atmosphärendruck betrieben werden können. Die Barrierenentladung, oder auchdielektrisch behinderte Entladung - kurz DBE oder stille Entladung, ist eine Plasmaquelle mit geringem operativem Aufwand. Es handelt sich um eine Hochdruckglimmentladung, die mit WechselSpannung betrieben wird. Sie besteht aus einer Vielzahl schnell verlöschender Mikroentladungen.

Bei höheren Drücken bildet sich in der Regel durch Stopswechselwirkungen aller Teilchen untereinander innerhalb von 0,1 bis 1 µs ein thermisches Gleichgewicht in der Entladung aus. Um dies zu verhindern wird bei der Barrierenentladung der Entladungsraum zwischen den Elektroden mit mindestens einer dielektrischen Schicht ausgestattet, die den Entladungsraum kapazitiv abschließt und unterbricht. Die dielektrischen Barrieren verhindern, dass die Gasentladung nach dem Zünden ins thermische Gleichgewicht übergeht. Sie unterbinden den Ladungsabfluß, wodurch sich ein Gegenfeld aufbaut und die Einzel- oder Mikroentladungen rechtzeitig vor dem Eintritt der Thermalisierung zum Verlöschen gebracht werden. Die Einzelentladungen erlöschen je nach Entladungsanordnung, Gaszusammensetzung und bei einem typischen Druck von einem bar nach etwa 10 bis einigen 100 ns. Aufgrund der kurzen Dauer der Entladung erhöht sich die Gastemperatur trotz hoher Elektronenenergien von bis zu 10 eV in einer Mikroentladung nur unwesentlich.

Im Fall der DBE wird das Plasma durch Anlegen einer Wechselspannung zwischen zwei Elektroden erzeugt, die sich in einem gewissen Abstand d gegenüberstehen. Der Raum zwischen den beiden Elektroden ist der Entladungsraum. Die Anordnung aus Elektroden und Entladungsraum wird im folgenden auch als Plasmareaktor bezeichnet.

Die Elektroden können als Platten ausgebildet oder auch zu konzentrischen Rohren geformt sein. Das Dielektrikum oder die dielektrische Schicht wird direkt auf eine oder auf beide Elektroden aufgebracht. Man erhält dann eine einseitig oder beidseitig dielektrisch behinderte Entladung. Es können Wechselspannungen mit Frequenzen zwischen 50 Hz und 1 MHz eingesetzt werden.

Durch eine geeignete Formgebung der Elektroden können inhomogene, elektrische Feldverteilungen erzeugt werden, die infolge eines Feldeffektes zu einer geringeren Zündspannung, verglichen mit einer Plattenanordnung bei gleichem Elektrodenabstand, führen. Einen Spezialfall stellt der sogenannte Packed-Bed-Reaktor dar, bei dem der Entladungsraum mit einer unregelmäßigen Schüttung von Kugeln, im folgenden auch als Pellets bezeichnet, aus dielektrischem Material gefüllt ist, wobei auch in diesem Fall wenigstens eine der beiden Elektroden durch ein aufgebrachtes Dielektrikum dielektrisch behindert ist.

Bevorzugt wird für das erfindungsgemäße Verfahren ein Packed-Bed-Reaktor eingesetzt. Dieser Reaktortyp ermöglicht es durch Ausbildung von Gleitentladungen auf der Oberfläche der Pellets, eine höhere Elektronentemperatur in der Gasentladung zu erzielen. Zweckmäßigerweise ist der Katalysator selbst zu solchen Pellets beziehungsweise Formkörpern verformt. Die Formkörper enthalten dann die katalytisch aktiven Komponenten homogen über ihr Volumen verteilt. Sie bilden daher einen sogenannten Vollkatalysator.

Da die Bildung der Radikale infolge der Gleitentladungen auf der Oberfläche der Formkörper des Packed-Bed-Reaktors stattfindet, ist es besonders vorteilhaft, wenn der Katalysator in Form eines sogenannten Schalenkatalysators vorliegt. Bei einem solchen Katalysator befinden sich die katalytisch aktiven Komponenten nur in einer Oberflächenschale der Formkörper und weisen damit einen optimalen Kontakt zu in den Gleitentladungen gebildeten, angeregten Gaskomponenteh auf. Die angeregten Gaskomponenten können also innerhalb ihrer Lebensdauer von einigen Mikrosekunden und weniger mit dem Katalysator in Wechselwirkung treten.

Die Herstellung von Schalenkatalysatoren ist dem Fachmann bekannt. Hierzu wird das Trägermaterial für den Katalysator zu Formkörpern verformt, die dann mit einer wäßrigen oder organischen Lösung einer löslichen Vorläuferverbindung der katalytisch aktiven Komponente (zum Beispiel Eisennitrat) imprägniert werden. Durch geeignete Führung des Imprägniervorganges können die katalytisch aktiven Komponenten in einer Oberflächenschale einstellbarer Dicke abgeschieden werden. Nach der Imprägnierung werden die Vorläuferverbindungen der katalytisch aktiven Komponenten durch Calcinierung und gegebenenfalls Reduktion in die katalytisch aktiven Metalle überführt.

Als Trägermaterial für die katalytisch aktiven Komponenten werden hochoberflächige Materialien verwendet. Als hochoberflächig werden im Rahmen dieser Erfindung Materialien bezeichnet, deren spezifische BET-Oberfläche (gemessen durch Auswertung von Stickstoff-Adsorptionsisothermen gemäß DIN 66132) größer als 5 m²/g ist. Als Trägermaterialien werden Titanoxid, Aluminiumoxid, Siliziumdioxid, Ceroxid, Zirkonoxid, Zeolithe und Mischungen oder Mischoxide hiervon verwendet.

Alternativ zu den beschriebenen Voll- und Schalenkatalysatoren kann der Katalysator auch als Beschichtungskatalysator ausgeführt sein. Hierzu wird der Katalysator in Form einer dünnen Oberflächenbeschichtung mit einer Dicke von zum Beispiel 1 bis 100 µm auf geeignete Formkörper aufgebracht. Bevorzugt werden Formkörper aus dielektrischen, keramischen Materialien oder Gläsern verwendet, die gegenüber den Radikalen in der Gasentladung inert sind. Geeignete keramische Materialien sind Aluminiumoxid, Zirkonoxid, Titanoxid, Cordierit und Mullit.

Das erfindungsgemäße Verfahren kann bei unterschiedlichen Reaktionstemperaturen im Plasmareaktor betrieben werden. Seine Vorzüge bestehen jedoch unter anderem darin, daß es noch bei niedrigen Temperaturen zwischen Raumtemperatur und etwa 200°C voll funktionsfähig ist. In vielen Fällen kann sogar direkt bei Raumtemperatur gearbeitet werden. Daher besteht die Möglichkeit, die Formkörper für die Beschichtungskatalysatoren auch aus organische Materialien zu fertigen, die gegenüber den Reaktionstemperaturen und den Radikalen in der Gasentladung beständig sind. Geeignete organische Materialien sind zum Beispiel organische Polymere mit einem Isolationswiderstand von mehr als 10⁶ Ω·cm.

Die Form der Katalysatorkörper ist weitgehend beliebig. Es können alle aus der Festbettkatalyse bekannten Formen eingesetzt werden. Bevorzugt werden Kugeln (Pellets), Tabletten oder Ringe verwendet. Sie sollten der Gasströmung einen möglichst geringen Strömungswiderstand entgegensetzen. Es besteht auch die Möglichkeit, sogenannte Wabenkörper zu verwenden, die von einer Vielzahl paralleler Strömungskanäle für die Reaktionsgase durchzogen werden. Die Wabenkörper können als Vollkatalysator ausgeführt sein oder eine Beschichtung der Wände der Strömungskanäle mit dem Katalysator aufweisen. Die Maßnahmen zur Herstellung solcher Katalysatoren sind dem Fachmann bekannt.

Gemäß Reaktionsgleichung (3) beträgt das stöchiometrische Verhältnis zwischen Stickstoff und Wasserdampf 1:3. In der praktischen Durchführung des Verfahrens hat sich jedoch ein Molverhältnis zwischen Stickstoff und Wasserdampf im Gasstrom von 100:1 bis 10:1 als vorteilhaft erwiesen, wobei der überwiegende Teil des Stickstoffs als Traggas dient.

Die Erfindung wird nun an Hand der Figuren 1 bis 4 und den beiden Beispielen näher erläutert. Es zeigen
- **Figur 1:**: Dielektrische Barrierenentladung mit parallelen, flächigen Elektroden; einseitig dielektrisch behinderte Entladung
- **Figur 2:**: Dielektrische Barrierenentladung mit parallelen, flächigen Elektroden; beidseitig dielektrisch behinderte Entladung
- **Figur 3:**: Dielektrische Barrierenentladung mit parallelen, flächigen Elektroden; beidseitig dielektrisch behindert; mit Pellets gefüllter Entladungsraum
- **Figur 4:**: Koaxialer Reaktor mit Pelletkatalysator

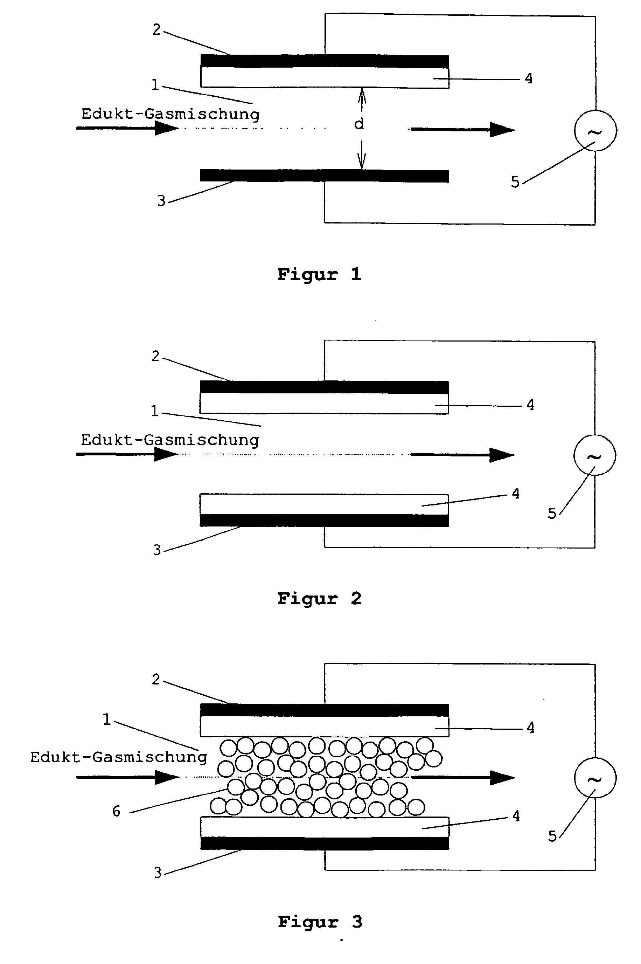

Figur 1 zeigt den prinzipiellen Aufbau eines Plasmareaktors, in dem eine dielektrische Barrierenentladung gezündet werden kann. (2) und (3) bezeichnen zwei metallische Elektroden, die sich gegenüberstehen und mit einer Wechselspannungsquelle (5) verbunden sind. Sie begrenzen den Entladungsraum (1), durch den die Edukt-Gasmischung geführt wird. Zur Unterbindung der Ausbildung eines Entladungsbogens zwischen den beiden Elektroden ist Elektrode (2) mit einem Dielektrikum (4) belegt. Eine solche Entladung wird als einseitig dielektrisch behindert bezeichnet.

Durch Anlegen einer Wechselspannung an die beiden Elektroden kommt es bei ausreichender Spannung zu der gewünschten Entladung. Die Wechselspannung kann unterschiedliche Formen aufweisen (sinus-, dreieck-, rechteckförmig). Ebenso ist eine pulsförmige Ausbildung der Spannung mit unterschiedlichen Tast- und/oder Modulationsgraden möglich.

Die benötigte Spannungsamplitude hängt von dem freien Abstand d zwischen Dielektrikum und Gegenelektrode, vom verwendeten Dielektrikum sowie vom Druck in der Entladungsstrecke, von der Gaszusammensetzung, der Anstiegsgeschwindigkeit der Spannung und von eventuell vorhandenen Einbauten zwischen den Dielektrika im Entladungsraum ab. Der Abstand d wird bevorzugt zwischen 0,1 und 10 mm eingestellt. Die benötigten Spannugsamplituden können bis 15 kV betragen. Die Frequenz der Wechselspannung kann zwischen 50 Hz und 1 MHz gewählt werden.

Figur 2 zeigt eine Abwandlung der Anordnung von Figur 1. In Figur 2 sind beide Elektroden mit einem Dielektrikum belegt. Die sich im Entladungsraum ausbildende Gasentladung wird deshalb als beidseitig dielektrisch behindert bezeichnet.

Figur 3 zeigt einen für die Durchführung des Verfahrens besonders geeigneten Plasmareaktor. Der Entladungsraum ist mit den Katalysatorkörpern gefüllt. Die sich in dem mit den Katalysatorkörpern gefüllten Reaktor ausbildende elektrische Entladung findet vor allen Dingen in Form von Gleitentladungen an der Oberfläche der Katalysatorkörper statt. Dadurch ist die Konzentration an Ionen und Radikalen in räumlicher Nachbarschaft der Oberfläche sehr hoch.

Zusätzlich zu den Katalysatorkörpern oder alternativ dazu kann das Dielektrikum auf den Elektrodenoberflächen mit einer katalytisch aktiven Schicht versehen sein. In bestimmten Anwendungsfällen kann das Dielektrikum auf den Elektrodenoberflächen selbst als katalytisch aktive Schicht ausgebildet sein. Voraussetzung hierfür ist, dass die Isolationswirkung der Schicht den Anforderungen einer dielektrisch behinderten Entladung genügt.

Die Elektroden des Plasmareaktors können als parallel zueinander ausgerichtete flächige Gebilde aufgebaut sein oder eine koaxiale Anordnung mit einer Mittenelektrode, die von einer Rohrelektrode umgeben ist, bilden. Zur Erleichterung der Ausbildung von Entladungsfäden können räumliche Inhomogenitäten vorgesehen sein, die zu lokalen Feldüberhöhungen und damit zur Ausbildung der Entladung führen. Wie aus der Literatur bekannt ist, ist die eingekoppelte Elektronenenergie bei einer Plasmaentladung abhängig vom Produkt aus Elektrodenabstand d und Druck p (d*p), so dass bei konstantem Gasdruck allein über die Änderung der Geometrie des Reaktors, bestimmte Radikalreaktionen im Plasma gefördert beziehungsweise unterdrückt werden können. Für das vorgeschlagene Verfahren sollte das Produkt aus Elektrodenabstand und Druck im Bereich zwischen 0,1 und 100 mm*bar liegen.

Die Entladung kann über verschiedenartige Wechselspannungen angeregt werden. Für eine hohe Elektronendichte und möglichst gleichzeitige Ausbildung der Entladung im gesamten Entladungsraum des Reaktors sind pulsförmige Anregungsspannungen besonders geeignet. Diese Wechselspannungen können auch mit niedriger Frequenz moduliert sein (beispielsweise 100 bis 0,01 Hz), um die Reaktion von adsorbierten Spezies zu ermöglichen.

Der Reaktor kann aus jedem elektrisch und thermisch geeigneten Material hergestellt werden. Insbesondere sind Kunststoffe, Keramiken und Gläser zu nennen. Ebenso sind hybride Konstruktionen aus verschiedenen Materialien möglich.

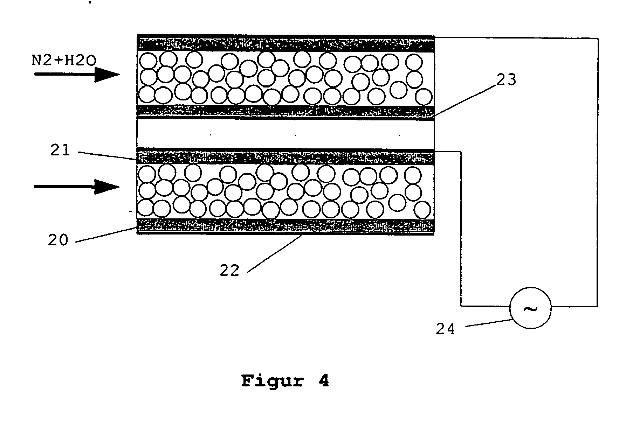

Die folgenden Untersuchungen wurden in einem koaxialen Plasmareaktor gemäß Figur 4 durchgeführt. (20) bezeichnet ein Außenrohr und (21) ein Innenrohr aus Quarzglas. Die Innenfläche des Innenrohres und die Außenfläche des Außenrohres sind mit metallischen Elektroden (23) und (22) belegt. Durch Anlegen einer Spannungsquelle (24) an diese Elektroden kann im ringförmigen Zwischenraum zwischen Innenrohr und Außenrohr eine dielektrische Barrierenentladung gezündet werden.

Außen- und Innenrohr bestanden aus 2 mm dickem Quarzglas. Das Außenrohr hatte einen Außendurchmesser von 4 und das Innenrohr einen Innendurchmesser von 2,6 cm. Die Länge des Reaktors betrug 20 und die Länge der Elektroden 16 cm.

### Beispiel:

Es wurde ein mit Eisen belegter Katalysator auf Pellets aus Aluminiumoxid (spezifische Oberfläche: 50 m²/g; 1,5 bis 3 mm Durchmesser) hergestellt. Hierzu wurden die Pellets mit einer Lösung von Eisennitrat imprägniert, getrocknet und bei 500°C unter Formiergas (95 Vol.-% Stickstoff, 5 Vol.-% Wasserstoff) calciniert. Der fertige Katalysator enthielt 5,3 g/l Eisen.

Mit diesem Katalysator wurde der Gasentladungsraum zwischen den beiden Quarzrohren des Plasmareaktors gefüllt. Durch den Reaktor wurde bei Temperaturen zwischen 100 und 150°C eine Gasmischung aus 97,4 Vol.-% Stickstoff und 2,6 Vol.-% Wasserdampf (Molverhältnis N₂/H₂O = 37,5:1) mit einer Raumgeschwindigkeit von 17000 h⁻¹ geführt.

Durch Anlegen einer Sinusspannung von 2 kHz und einer Amplitude von 14 kV wurde eine Barrierenentladung gezündet. Die in die Entladung eingespeiste elektrische Leistung betrug 5 W. Die aus dem Reaktor austretende Gasmischung wurde spektroskopisch untersucht. Es konnten deutlich die drei Absorptionsbanden des Ammoniaks zwischen 200 und 210 nm identifiziert werden. Die Konzentration des erzeugten Ammoniaks in der Produktgasmischung betrug 20 ppm.

### Vergleichsbeispiel:

Der Versuch des obigen Beispiels wurde wiederholt. Jedoch wurden die mit Eisen belegten Aluminiumoxid-Pellets durch unbelegte Aluminiumoxid-Pellets ersetzt. Im Produktgasgemisch ließ sich kein Ammoniak nachweisen.

## Patentansprüche

1. Verfahren zur plasmakatalytischen Erzeugung von Ammoniak, wobei ein Stickstoff und Wasserdampf enthaltender Gasstrom bei Atmosphärendruck durch eine elektrische Gasentladung geführt wird, in deren Entladungsraum ein Katalysator angeordnet ist, welcher eine katalytisch aktive Komponente aus wenigstens einem Metall aus der Gruppe Titan, Zirkon, Hafnium, Vanadium, Niob, Tantal, Chrom, Molybdän, Wolfram, Eisen, Ruthenium, Osmium, Kobalt, Rhodium, Iridium, Nickel, Palladium, Platin, Mangan und Kupfer auf einem Trägermaterial, ausgewählt aus Titanoxid, Aluminiumoxid, Siliziumdioxid, Ceroxid, Zirkonoxid, Zeolithen oder Mischungen und Mischoxiden davon mit einer spezifischen Oberfläche von mehr als 5 m²/g, enthält, wobei als Gasentladung eine dielektrisch behinderte Entladung eingesetzt wird.

2. Verfahren nach Anspruch 1, wobei die dielektrisch behinderte Entladung mit einer Frequenz zwischen 50 Hz und 1 MHz betrieben wird.

3. Verfahren nach Anspruch 1 oder 2, wobei der Gasstrom Wasserdampf und Stickstoff im Molverhältnis zwischen 100:1 und 10:1 enthält.

4. Verfahren nach einem der Ansprüche 1 bis 3, wobei der Katalysator zu Formkörpern verformt ist.

5. Verfahren nach einem der Ansprüche 1 bis 3, wobei das Trägermaterial zu Formkörpern verformt ist und die katalytisch aktive Komponente nur in einer Oberflächenschale in die Formkörper eingebracht ist.

6. Verfahren nach einem der Ansprüche 1 bis 3, wobei der Katalysator in Form einer Oberflächenbeschichtung auf Formkörpern aus dielektrischen, keramischen Materialien oder Gläsern aufgebracht ist.

7. Verfahren nach einem der Ansprüche 1 bis 3, wobei der Katalysator in Form einer Oberflächenbeschichtung auf Formkörpern aus organischen Polymeren mit einem Isolationswiderstand von mehr als 10⁶ Ω·cm aufgebracht ist.

## Claims

1. A process for the plasma catalytic preparation of ammonia, wherein a gas stream containing nitrogen and water vapour is passed at atmospheric pressure through an electrical gas discharge, in the discharge space of which is placed a catalyst which contains a catalytically active component of at least one metal selected from the group of titanium, zirconium, hafnium, vanadium, niobium, tantalum, chromium, molybdenum, tungsten, iron, ruthenium, osmium, cobalt, rhodium, iridium, nickel, palladium, platinum, manganese and copper on a support selected from titanium oxide, aluminium oxide, silicon dioxide, cerium oxide, zirconium oxide, zeolites, or mixtures or mixed oxides thereof having a specific surface area of more than 5 m²/g, wherein a dielectric barrier discharge is employed as the gas discharge.

2. The process according to claim 1, wherein the dielectric barrier discharge is run at a frequency between 50 Hz and 1 MHz.

3. The process according to claim 1 or 2, wherein the gas stream contains water vapour and nitrogen in a molar ratio between 100:1 1 and 10:1.

4. The process according to any of claims 1 to 3, wherein the catalyst is shaped into molded bodies.

5. The process according to any of claims 1 to 3, wherein the support is shaped into molded bodies and the catalytically active component is incorporated in the molded bodies only in a surface shell.

6. The process according to any of claims 1 to 3, wherein the catalyst is applied in the form of a surface coating on molded bodies of dielectric, ceramic materials or glasses.

7. The process according to any of claims 1 to 3, wherein the catalyst is applied in the form of a surface coating on molded bodies of organic polymers having an insulation resistance of more than 10⁶ Ω·cm.

## Revendications

1. Procédé pour la production plasma-catalytique d'ammoniac, selon lequel on fait passer un flux de gaz contenant de l'azote et de la vapeur d'eau à la pression atmosphérique à travers une décharge de gaz électrique, dans une chambre de décharge logeant un catalyseur qui contient un composant à action catalytique constitué d'au moins un métal du groupe titane, zirconium, hafnium, vanadium, niobium, tantale, chrome, molybdène, tungstène, fer, ruthénium, osmium, cobalt, rhodium, iridium, nickel, palladium, platine, manganèse et cuivre, sur un support choisi parmi l'oxyde de titane, l'oxyde d'aluminium, le dioxyde de silicium, l'oxyde de cérium, l'oxyde de zirconium, les zéolithes, ou des mélanges et des oxydes mixtes de ceux-ci, et ayant une surface spécifique de plus de 5 m²/g, la décharge de gaz utilisée étant une décharge à barrière diélectrique.

2. Procédé selon la revendication 1,
selon lequel la décharge à barrière diélectrique fonctionne à une fréquence comprise entre 50 Hz et 1 MHz.

3. Procédé selon la revendication 1 ou la revendication 2,
dans lequel le flux de gaz contient de la vapeur d'eau et de l'azote dans un rapport molaire compris entre 100:1 1 et 10:1.

4. Procédé selon l'une quelconque des revendications 1 à 3,
dans lequel le catalyseur est façonné en corps moulés.

5. Procédé selon l'une quelconque des revendications 1 à 3,
dans lequel le support est façonné en corps moulés et le composant à action catalytique n'est incorporé dans les corps moulés que dans une couche superficielle.

6. Procédé selon l'une quelconque des revendications 1 à 3,
dans lequel le catalyseur est appliqué sous forme de revêtement de surface sur des corps moulés constitués de matières céramiques diélectriques ou de verres.

7. Procédé selon l'une quelconque des revendications 1 à 3,
selon lequel le catalyseur est appliqué sous forme de revêtement de surface sur des corps moulés en polymères organiques d'une résistance diélectrique supérieure à 10⁶ Ω·cm.
